# EUROPEAN PATENT APPLICATION

(11) **EP 4 518 397 A1**
(43) Date of publication of application: **05.03.2025**
(21) Application number: 22940277.1
(22) Date of filing: 28.04.2022
(51) Int. Cl.: H04W 16/28, H04B 7/0413

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/019437
(87) International publication number: WO 2023/210004

(57) **Abstract**

A terminal according to an aspect of the present disclosure includes: a control section that judges an eight-port partial-coherent precoder on the basis of at least one of a four-port precoder and a two-port precoder; and a transmitting section that performs uplink transmission on the basis of the eight-port partial-coherent precoder. An aspect of the present disclosure allows UL transmission using more than four antenna ports to be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement, and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) Multi Input Multi Output (MIMO) transmission with up to four layers is supported. For future NR, in order to achieve higher spectrum efficiency, supporting UL transmission with more than four layers is under study. For example, for Rel-18 NR, transmission with six rank at maximum using six antenna ports, transmission with six or eight rank at maximum using eight antenna ports, and the like are under study.

Regarding UL transmission using more than four antenna ports, however, progress has not been made with studies on how to determine a precoding matrix. For example, progress has not been made with a study on a precoder for transmission with one to eight layers using eight antenna ports. Unless this is made clear, an increase in communication throughput may be suppressed.

In view of this, the present disclosure has one object to provide a terminal, a radio communication method, and a base station that enable appropriate control of UL transmission using more than four antenna ports.

### Solution to Problem

A terminal according to an aspect of the present disclosure includes: a control section that judges an eight-port partial-coherent precoder on the basis of at least one of a four-port precoder and a two-port precoder; and a transmitting section that performs uplink transmission on the basis of the eight-port partial-coherent precoder.

### Advantageous Effects of Invention

An aspect of the present disclosure allows UL transmission using more than four antenna ports to be appropriately controlled.

### Brief Description of Drawings

[FIG. 1] FIG. 1 is a diagram to show an example of a table of precoding matrices W for single-layer (rank 1) transmission using four antenna ports in a case that a transform precoder is disabled, in Rel-16 NR.
[FIG. 2] FIG. 2 is a diagram to show an example of a table of precoding matrices W for two-layer (rank 2) transmission using four antenna ports in a case that a transform precoder is disabled, in Rel-16 NR.
[FIG. 3] FIG. 3 is a diagram to show an example of a table of precoding matrices W for three-layer (rank 3) transmission using four antenna ports in a case that a transform precoder is disabled, in Rel-16 NR.
[FIG. 4] FIG. 4 is a diagram to show an example of a table of precoding matrices W for four-layer (rank 4) transmission using four antenna ports in a case that a transform precoder is disabled, in Rel-16 NR.
[FIG. 5] FIG. 5A is a diagram to show an example of a table of precoding matrices W for single-layer (rank 1) transmission using two antenna ports, in Rel-16 NR. FIG. 5B is a diagram to show an example of a table of precoding matrices W for two-layer (rank 2) transmission using two antenna ports in a case that transform precoding is disabled, in Rel-16 NR.
[FIG. 6] FIG. 6 is a diagram to show an example of a correspondence between a precoding-information-and-number-of-layers field value and the number of layers and a TPMI, in Rel-16 NR.
[FIG. 7] FIGS. 7A and 7B are each a diagram to show an example of an antenna layout of eight antenna ports.
[FIG. 8] FIGS. 8A to 8C are each a diagram to show an example of an antenna layout of eight antenna ports, for describing coherent information according to a first embodiment.
[FIG. 9] FIGS. 9A and 9B are each a diagram to show an example of eight-port PC precoders according to a second embodiment.
[FIG. 10] FIGS. 10A and 10B are each a diagram to show an example of eight-port PC precoders according to the second embodiment.
[FIG. 11] FIG. 11 is a diagram to show the numbers of existing four-port PC/FC precoders shown in FIGS. 1 to 4.
[FIG. 12] FIGS. 12A to 12D are each a diagram to show an example of an eight-port PC precoder according to a third embodiment.
[FIG. 13] FIGS. 13A to 13D are each a diagram to show an example of an eight-port PC precoder according to the third embodiment.
[FIG. 14] FIGS. 14A and 14B are each a diagram to show an example of eight-port PC precoders according to the second embodiment.
[FIG. 15] FIGS. 15A and 15B are each a diagram to show an example of eight-port PC precoders according to a fourth embodiment.
[FIG. 16] FIGS. 16A and 16B are each a diagram to show an example of an eight-port PC precoder according to a fifth embodiment.
[FIG. 17] FIGS. 17A to 17D are each a diagram to show an example of an eight-port PC precoder according to a sixth embodiment.
[FIG. 18] FIGS. 18A and 18B are each a diagram to show an example of an eight-port NC precoder(s) according to one embodiment of the present disclosure.
[FIG. 19] FIGS. 19A to 19C are each a diagram to show an example of an eight-port NC precoder according to one embodiment of the present disclosure.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a given number of SRS resources (may group the given number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic CSI (Aperiodic SRS (A-SRS)). Note that the UE may transmit a P-SRS and an SP-SRS periodically (or periodically after activation) and may transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission (codebook-based transmission), the UE may determine a precoder (precoding matrix) for the PUSCH transmission on the basis of an SRI, a transmitted rank indicator (TRI), and a transmitted precoding matrix indicator (TPMI). In a case of non-codebook based transmission (non-codebook-based transmission), the UE may determine a precoder for the PUSCH transmission on the basis of an SRI.

The SRS resource information may include an SRS resource ID (SRS-ResourceId), the number of SRS ports, an SRS port number, a transmission Comb, SRS resource mapping (for example, a time and/or frequency resource position, resource offset, a resource periodicity, the number of times of repetition, the number of SRS symbols, an SRS bandwidth, or the like), hopping-related information, an SRS resource type, a sequence ID, spatial relation information of the SRS, and the like.

The spatial relation information of the SRS (for example, an RRC information element "spatialRelationInfo") may indicate spatial relation information between a given reference signal and the SRS. The given reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include, as an index for the given reference signal, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include, a serving cell index corresponding to the given reference signal, a BWP index (BWP ID), and the like.

With respect to a given SRS resource, in a case where the UE is configured with spatial relation information related to an SSB or CSI-RS and the SRS, the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a given SRS (target SRS) resource, in a case where the UE is configured with spatial relation information related to another SRS (reference SRS) and the SRS (target SRS), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

The UE may determine, based on a value of a given field (for example, SRS resource identifier (SRI) field) in DCI (for example, DCI format 0_1), a spatial relation of a PUSCH scheduled by the DCI. Specifically, the UE may use, for PUSCH transmission, the spatial relation information (for example, an RRC information element "spatialRelationInfo") of the SRS resource determined based on the given field value (for example, SRI).

In Rel-15/16 NR, in a case where codebook based transmission is used for a PUSCH, the UE may be configured with an SRS resource set for codebook usage including two SRS resources at maximum by RRC, and may be indicated with one of the two SRS resources at maximum by DCI (one-bit SRI field). A transmit beam for the PUSCH may be specified by an SRI field.

The UE may judge a TPMI and the number of layers (transmission rank) for the PUSCH on the basis of a precoding-information-and-number-of-layers field (hereinafter, also referred to as "precoding information field"). From an uplink codebook for the number of ports the same as the number of SRS ports indicated by a higher layer parameter "nrofSRS-Ports" configured for an SRS resource specified by the SRI field described above, the UE may select a precoder on the basis of the TPMI, the number of layers, and the like.

In Rel-15/16 NR, in a case where non-codebook based transmission is used for a PUSCH, the UE may be configured with an SRS resource set for non-codebook usage including four SRS resources at maximum by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

### (Determination of PUSCH Precoder in Codebook (CB) Based Transmission)

As described above, in a case of codebook (CB) based transmission, a UE may determine a precoder for PUSCH transmission on the basis of an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by a precoding-information-and-number-of-layers field ("Precoding information and number of layers" field) of the DCI. For simplicity, the "precoding-information-and-number-of-layers field" is also referred to as a "precoding information field."

The UE may report UE capability information related to a precoder type and be configured, by a base station, with the precoder type based on the UE capability information by higher layer signaling. The UE capability information may be information about a precoder type to be used by the UE in the PUSCH transmission (for example, which may be indicated by an RRC parameter "pusch-TransCoherence").

The UE may determine a precoder to be used for the PUSCH transmission on the basis of information about a precoder type (for example, an RRC parameter "codebookSubset") included in PUSCH configuration information (for example, "PUSCH-Config" information element of RRC signaling) notified by higher layer signaling. The UE may be configured with a subset of a PMI specified by a TPMI, by the "codebookSubset."

Note that the precoder type may be specified by any one of full coherent (fully coherent), partial coherent, and non-coherent (non coherent), or a combination of at least two of them (which may be indicated, for example, by a parameter such as "fullyAndPartialAndNonCoherent" or "partialAndNonCoherent."

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent," "partialAndNonCoherent," or "nonCoherent."

Full coherent may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

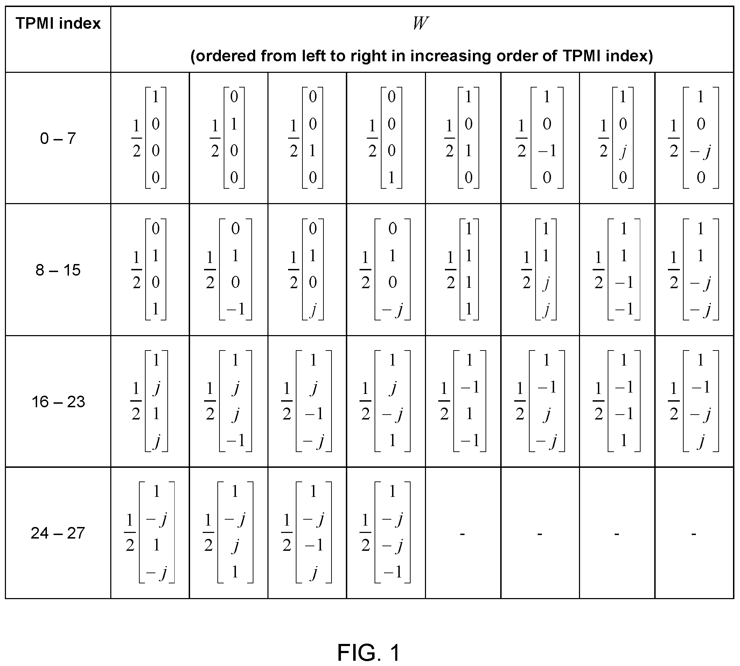

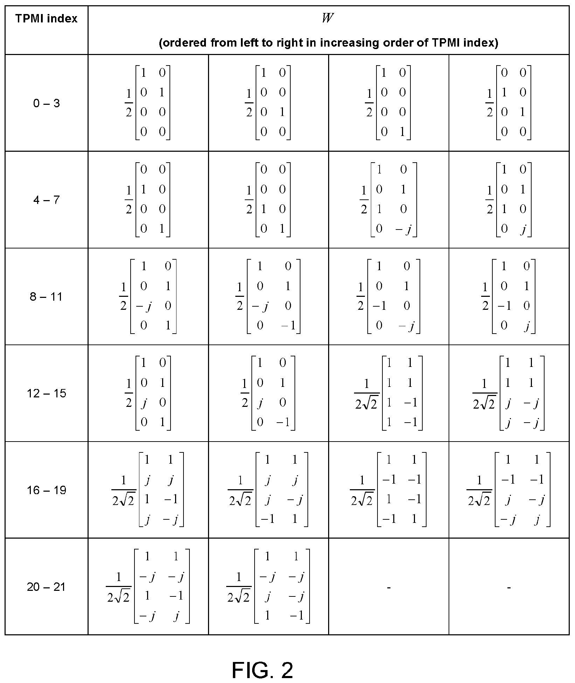

FIGS. 1 to 5 are each a diagram to show an example of association between codebook subsets and TPMI indices. FIG. 1 corresponds to a table of precoding matrices W for single-layer (rank 1) transmission using four antenna ports in a case that transform precoding (which may be referred to as transform precoder) is disabled, in Rel-16 NR. In FIG. 1, corresponding W is shown, from left to right in ascending order of TPMI indices (this similarly applies to FIGS. 2 to 5).

Such a correspondence (which may be referred to as a table) indicating W corresponding to TPMI indices as shown in FIGS. 1 to 5 is also referred to as a codebook. A part of the codebook is also referred to as a codebook subset.

In FIG. 1, in a case where the codebook subset (codebookSubset) is fullyAndPartialAndNonCoherent, a UE is notified of a TPMI of any one of 0 to 27, for single-layer transmission. In a case where the codebook subset is partialAndNonCoherent, the UE is configured with a TPMI of any one of 0 to 11, for single-layer transmission. In a case where the codebook subset is nonCoherent, the UE is configured with a TPMI of any one of 0 to 3, for single-layer transmission.

FIGS. 2, 3, and 4 respectively correspond to tables of precoding matrices W for two-, three-, and four-layer (rank 2, 3, and 4) transmission using four antenna ports in a case that transform precoding is disabled, in Rel-16 NR.

In FIG. 2, TPMIs that a UE is notified of for two-layer transmission are 0 to 21 (the codebook subset is fullyAndPartialAndNonCoherent), 0 to 13 (the codebook subset is partialAndNonCoherent), or 0 to 5 (the codebook subset is nonCoherent) .

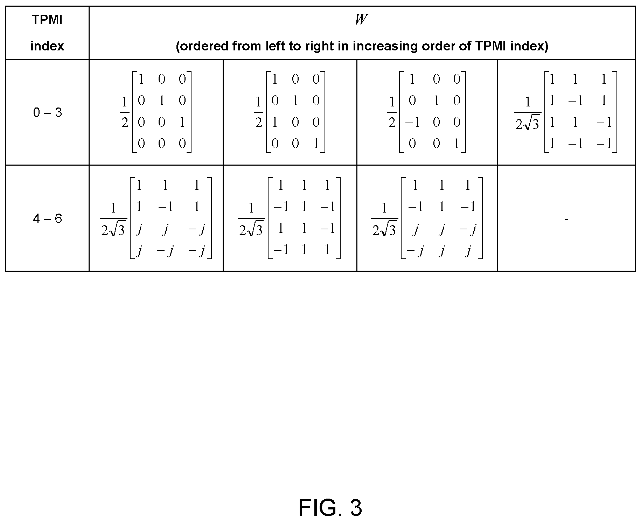

In FIG. 3, TPMIs that a UE is notified of for three-layer transmission are 0 to 6 (the codebook subset is fullyAndPartialAndNonCoherent), 0 to 2 (the codebook subset is partialAndNonCoherent), or 0 (the codebook subset is nonCoherent).

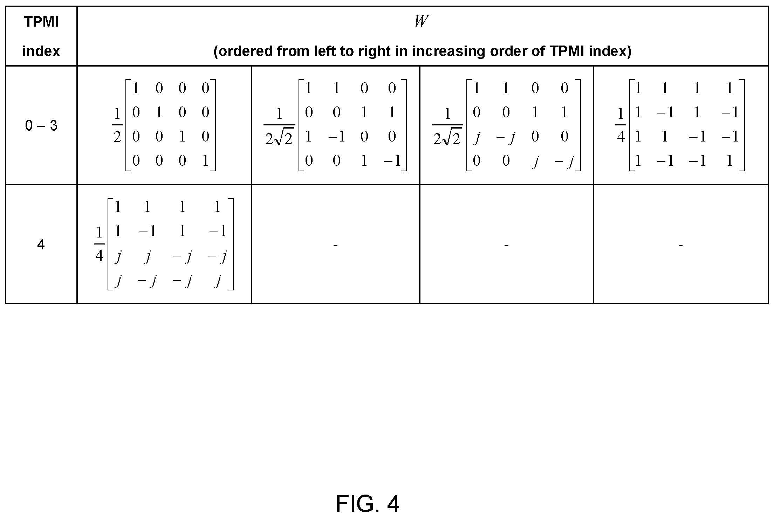

In FIG. 4, TPMIs that a UE is notified of for four-layer transmission are 0 to 4 (the codebook subset is fullyAndPartialAndNonCoherent), 0 to 2 (the codebook subset is partialAndNonCoherent), or 0 (the codebook subset is nonCoherent).

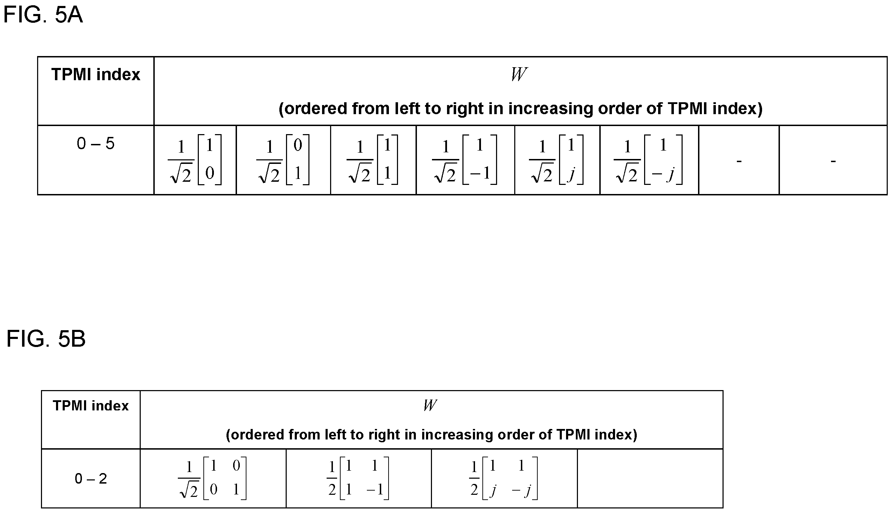

FIG. 5A corresponds to a table of precoding matrices W for single-layer (rank 1) transmission using two antenna ports, in Rel-16 NR. FIG. 5B corresponds to a table of precoding matrices W for two-layer (rank 2) transmission using two antenna ports in a case that transform precoding is disabled, in Rel-16 NR.

In FIG. 5A, TPMIs that a UE is notified of for two-port single-layer transmission are 0 to 5 (the codebook subset is fullyAndPartialAndNonCoherent), or 0 to 1 (the codebook subset is nonCoherent). In FIG. 5B, TPMIs that a UE is notified of for two-port two-layer transmission are 0 to 2 (the codebook subset is fullyAndPartialAndNonCoherent), or 0 (the codebook subset is nonCoherent) .

Note that a precoding matrix with only one element per column being other than 0 may be referred to as a non-coherent codebook. A precoding matrix with only a specific number of elements per column (more than one but not all elements in a column) being other than 0 may be referred to as a partial-coherent codebook. A precoding matrix with none of the elements per column being 0 may be referred to as a fully-coherent codebook.

The non-coherent codebook and the partial-coherent codebook may each be referred to as an antenna selection precoder, an antenna port selection precoder, or the like. For example, the non-coherent codebook (non-coherent precoder) may be referred to as a one-port selection precoder, a one-port port selection precoder (1-port port selection precoder), or the like. The partial-coherent codebook (partial-coherent precoder) may be referred to as an x-port selection precoder (x is an integer greater than one), an x-port port selection precoder, or the like. The fully-coherent codebook may be referred to as a non-antenna selection precoder, an all-port precoder, or the like.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the fully-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a fully-coherent codebook subset (for example, the RRC parameter "codebookSubset" = "fullyAndPartialAndNonCoherent").

Hereinafter, in the present disclosure, for simplicity, a non-coherent precoder, a partial-coherent precoder, and a fully-coherent precoder are simply referred to as an NC (non coherent) precoder, a PC (partial coherent) precoder, and an FC (full coherent) precoder, respectively.

Hereinafter, in the present disclosure, for simplicity, an NC/PC/FC precoder for i-layer transmission (i is an integer, i = 1 in a case of single-layer) with n antenna ports (n is an integer) is also simply referred to as an n-port i-layer NC/PC/FC precoder.

Note that, as seen from FIGS. 5A and 5B, no partial-coherent precoder for two-antenna-port transmission is present, and thus a configuration of the codebook subset being partialAndNonCoherent need not be applied to the two antenna ports.

### (Size of Precoding Information Field)

As described above, a UE may judge, based on a precoding information field of DCI (for example, DCI format 0_1/0_2) scheduling a PUSCH, a TPMI and the number of layers (transmission rank) for the PUSCH.

Regarding a codebook based PUSCH, the number of bits of a precoding information field may be judged (fluctuated) based on a configuration of enabling/disabling a transform precoder for the PUSCH (for example, a higher layer parameter "transformPrecoder"), a configuration of a codebook subset for the PUSCH (for example, a higher layer parameter "codebookSubset"), a configuration of the maximum number of layers for the PUSCH (for example, a higher layer parameter "maxRank"), a configuration of uplink full power transmission for the PUSCH (for example, a higher layer parameter "ul-FullPowerTransmission"), the number of antenna ports for the PUSCH, or the like.

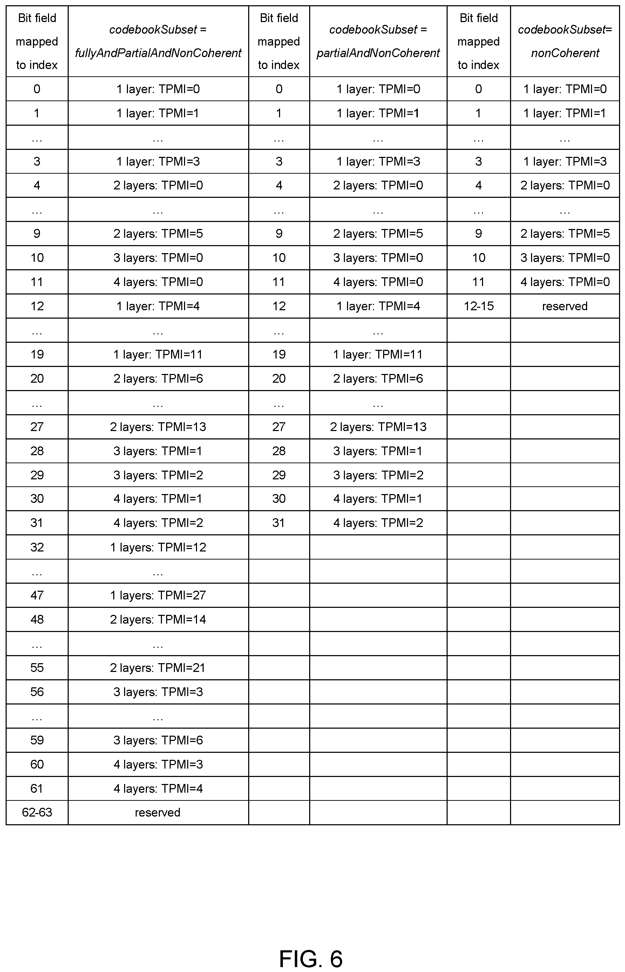

FIG. 6 is a diagram to show an example of a correspondence between a precoding-information-and-number-of-layers field value and the number of layers and a TPMI, in Rel-16 NR. The correspondence in this example is a correspondence for four antenna ports in a case where a transform precoder is configured to be disabled, the maximum rank (maxRank) is configured to be 2, 3, or 4, and no uplink full power transmission is configured or configuration of full power mode 2 (fullpowerMode2) is made or configuration of full power (fullpower) is made, but the correspondence is not limited to this. Note that it should be understood by a person skilled in the art that "Bit field mapped to index" shown in FIG. 6 indicates precoding-information-and-number-of-layers field values.

In FIG. 6, the precoding information field has six bits in a case where a codebook subset of full coherent (fullyAndPartialAndNonCoherent) is configured for a UE, has five bits in a case where a codebook subset of partial coherent (partialAndNonCoherent) is configured, and has four bits in a case where a codebook subset of non-coherent (nonCoherent) is configured.

Note that, as shown in FIG. 6, the number of layers and a TPMI that are corresponding to a given precoding information field value may be the same (common) regardless of the codebook subset configured for the UE. For example, in FIG. 6, the numbers of layers and TPMIs that are indicated with precoding information field values = 0 to 11 may be the same for the codebook subsets of full coherent (fullyAndPartialAndNonCoherent), partial coherent (partialAndNonCoherent), and non-coherent (nonCoherent). In FIG. 6, the numbers of layers and TPMIs that are indicated with precoding information field values = 0 to 31 may be the same for the codebook subsets of full coherent (fullyAndPartialAndNonCoherent) and partial coherent (partialAndNonCoherent).

Note that the precoding information field may have 0 bits for a non-codebook based PUSCH. The precoding information field may have 0 bits for a codebook based PUSCH with one antenna port.

### (Transmission with More Than Four Antenna Ports)

In Rel-15/16 NR, uplink (UL) Multi Input Multi Output (MIMO) transmission with up to four layers is supported. For future radio communication systems, in order to achieve higher spectrum efficiency, supporting UL transmission with more than four layers is under study. For example, for Rel-18 NR, transmission with six rank at maximum using six antenna ports, transmission with six or eight rank at maximum using eight antenna ports, and the like are under study.

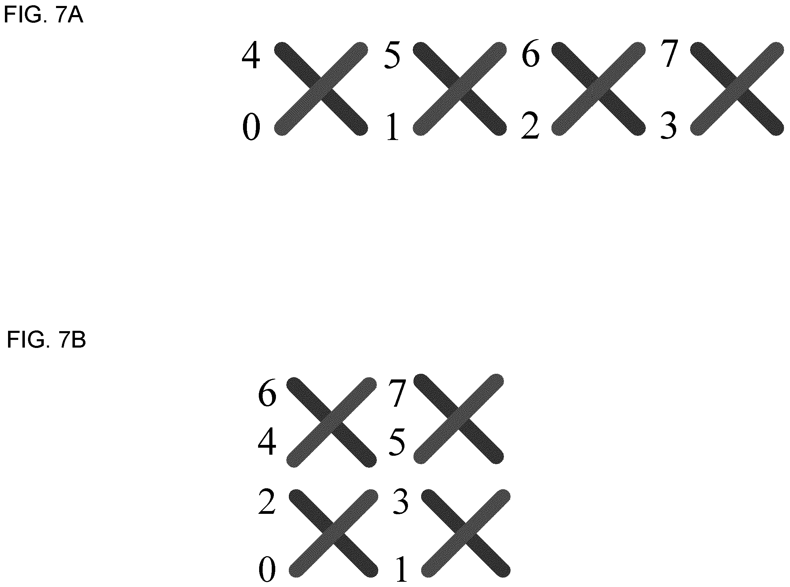

FIGS. 7A and 7B are each a diagram to show an example of an antenna layout of eight antenna ports. FIG. 7A shows an example where eight antennas are arranged in a one dimensional (1 dimensional (1D)) manner. FIG. 7B shows an example where eight antennas are arranged in a two dimensional (2 dimensional (2D)) manner. FIG. 7A corresponds to an antenna configuration including four cross polarization antennas aligned in the horizontal direction. FIG. 7B corresponds to an antenna configuration including two cross polarization antennas aligned in each of the horizontal and vertical directions.

Note that numbers shown may indicate antenna port numbers corresponding to respective antennas.

Note that the antenna layout is not limited to this. For example, the number of panels the antennas are arranged with, a panel orientation, coherency of each panel/antenna (such as full coherent, partial coherent, or non-coherent), an antenna arrangement in a specific direction (such as horizontal direction or vertical direction), and a polarization antenna configuration (such as single polarization, cross polarization, or the number of polarization surfaces) may be different from those in the examples of FIGS. 7A and 7B.

Although transmission of one codeword (CW) on one PUSCH is supported in Rel-15/16 NR, for Rel-18 NR, it is under study that a UE transmits more than one CWs on one PUSCH. For example, supporting two-CW transmission for ranks 5 to 8, supporting two-CW transmission for ranks 2 to 8, and the like are under study.

Although, for a UE in Rel. 15 and Rel. 16, it is assumed that only one beam/panel is used for UL transmission in a given time, for Rel. 17 or later versions, in order to improve UL throughput and reliability, simultaneous UL transmission (for example, PUSCH transmission) with a plurality of beams/plurality of panels for one or more TRPs is under study. Note that simultaneous PUSCH transmission with a plurality of beams/plurality of panels may correspond to PUSCH transmission with more than four layers or may correspond to PUSCH transmission with four or less layers.

A precoding matrix regarding UL transmission using more than four antenna ports (the number of antenna ports more than four) is under study. For example, a codebook for eight-port transmission (which may be referred to as an eight-transmission UL codebook (8 TX UL codebook) or the like) is under study.

Regarding UL transmission using more than four antenna ports (the number of antenna ports more than four), however, progress has not been made with studies on how to determine a precoding matrix. For example, progress has not been made with a study on a precoder for transmission with one to eight layers using eight antenna ports. Unless this is made clear, an increase in communication throughput may be suppressed.

In view of this, the inventors of the present invention came up with the idea of a method of appropriately performing UL transmission using more than four antenna ports.

Embodiments according to the present disclosure will be described in detail with reference to the drawings as follows.

The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna, an antenna element, a layer, transmission, a port, an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," or the like. The TCI state and the TCI may be interchangeably interpreted.

In the following embodiments, a "plurality of" and "two" may be interchangeably interpreted.

In the following embodiments, the number of layers for PUSCH transmission may be more than four, or may be four or less. For example, PUSCH transmission of two CWs in the present disclosure may be performed with four or less (for example, two) layers. The maximum number of layers is not limited to four or more, but may be less than four.

PUSCH transmission in the following embodiments may or may not premise use of a plurality of panels (may be applied regardless of panels).

### (Radio Communication Method)

### <First Embodiment>

A first embodiment relates to a configuration/capability for i-layer transmission (i is an integer, for example, i = 1, 2, ..., 8) using eight antenna ports.

For an 8 TX UL codebook, one or more UE coherent assumptions (UE coherent capabilities) and one or more codebook subset configurations may be applied.

For eight ports, "pusch-TransCoherence," "codebookSubset," or the like being an existing RRC parameter (or UE capability) may be used. For example, for the eight ports, a UE may judge a TPMI index for the 8 TX UL codebook on the basis of non-coherent (nonCoherent), partial coherent (partialCoherent), full coherent (fullCoherent), "partialAndNonCoherent," "fullyAndPartialAndNonCoherent," or the like.

For the eight ports, a new RRC parameter (or UE capability) may be used. For example, a UE may report, to a network (for example, base station), capability information indicating support of full coherent/partial coherent/non-coherent with a specific number of ports or less or may be configured with an RRC parameter indicating use of a fully-coherent/partial-coherent/non-coherent codebook subset for transmission with a specific number of ports or less.

For the eight ports, information indicating which port and which port are coherent (or which port and which port are to be used as of coherent) may be reported from a UE or may be configured for the UE.

For the eight ports, a UE that supports of partial coherent (has a capability of partial coherent) may transmit information related to what combination of antenna ports is coherent (by including the information in the capability information). Such information may be referred to as coherent information, coherent port information, or the like.

The coherent port information may be a bitmap of a size of the number of ports, and may mean that, for example, ports corresponding to a bit being '1' (or '0') are coherent with each other.

The coherent port information may be information related to a coherent group. Here, the coherent group may include X coherent ports (X is an integer of one or greater). The information related to a coherent group may indicate that a given coherent group includes X ports or may indicate respective port numbers (port indices) of X coherent ports included in a given coherent group.

The UE may report, to the network, UE capability information related to one or a plurality of coherent groups.

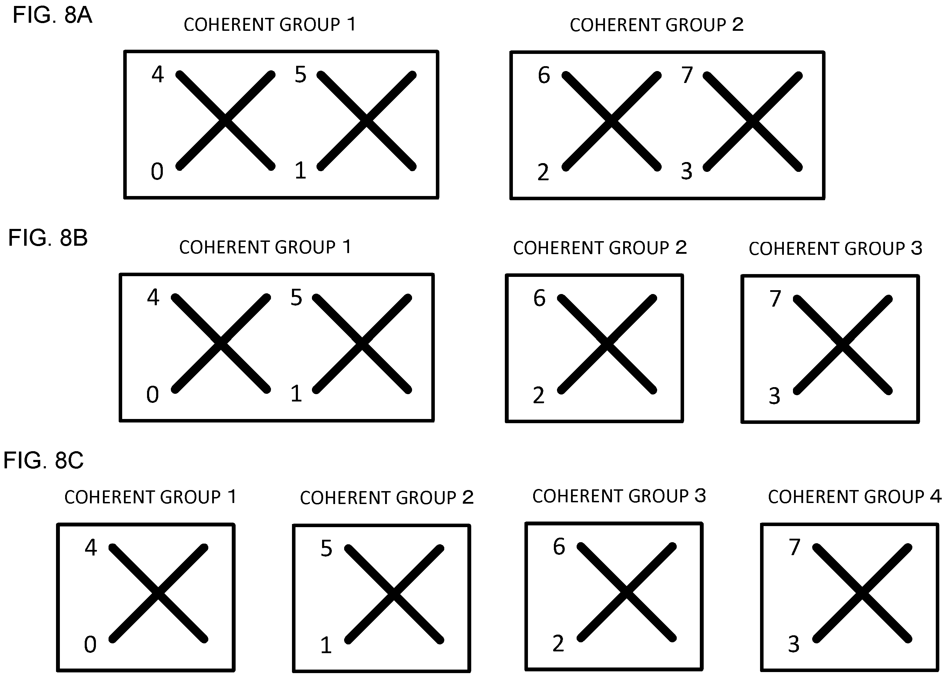

FIGS. 8A to 8C are each a diagram to show an example of an antenna layout of eight antenna ports, for describing the coherent information according to the first embodiment. FIG. 8A shows, although similar to FIG. 7A, a coherent group 1 including antenna numbers 0, 1, 4, and 5 that are coherent with each other and a coherent group 2 including antenna numbers 2, 3, 6, and 7 that are coherent with each other. Antennas included in the coherent group 1 and antennas included in the coherent group 2 are not coherent with each other.

For example, regarding FIG. 8A, a UE may transmit capability information indicating support of full coherent for four or less ports and support of partial coherent for five or more ports.

Regarding FIG. 8A, the UE may transmit, as the coherent port information, at least one of a bitmap "11001100" indicating the coherent group 1 and a bitmap "11001100" indicating the coherent group 2.

Regarding FIG. 8A, the UE may report, as the coherent port information, a value 4 being the number of ports included in a first coherent group (or a fact that the port numbers 0, 1, 4, and 5 are included in a given coherent group) or may report a value 4 being the number of ports included in a second coherent group (or a fact that the port numbers 2, 3, 6, and 7 are included in another coherent group).

Note that one coherent group may be further divided into a plurality of coherent groups. With such classification of coherent groups, flexible control can be expected to be achieved.

FIG. 8B shows a coherent group 1 including antenna numbers 0, 1, 4, and 5 that are coherent with each other, a coherent group 2 including antenna numbers 2 and 6 that are coherent with each other, and a coherent group 3 including antenna numbers 3 and 7 that are coherent with each other.

FIG. 8C shows a coherent group 1 including antenna numbers 0 and 4 that are coherent with each other, a coherent group 2 including antenna numbers 1 and 5 that are coherent with each other, a coherent group 3 including antenna numbers 2 and 6 that are coherent with each other, and a coherent group 4 including antenna numbers 3 and 7 that are coherent with each other.

Note that, hereinafter, for simplicity, a case that a partial-coherent UE has a capability of two four-port coherent groups as in FIG. 8A is also referred to as Case 1. A case that a partial-coherent UE has a capability of one four-port coherent group and two two-port coherent groups as in FIG. 8B is also referred to as Case 2. A case that a partial-coherent UE has a capability of four two-port coherent groups as in FIG. 8C is also referred to as Case 3. In the present disclosure, "having a capability of a coherent group" may be interchangeably interpreted as "having a capability supporting a coherent group," "being able to use a coherent group," or the like.

An 8 TX UL codebook for a PUSCH in the first embodiment may be used in a case where at least one of the following is met:
- Case where, for a UE, a transform precoder for a PUSCH is configured to be disabled
- Case where, for a UE, the number of ports more than four for a PUSCH/SRS (for a CB based PUSCH) is configured by RRC
- Case where, for a UE, the number of ports more than four for a PUSCH/SRS (for a CB based PUSCH) is configured/activated/specified by RRC/MAC CE/DCI

As described above, in the first embodiment, the number of ports of a precoding matrix to be used may be configured semi-statically by RRC. In the first embodiment, fallback (or switching, switch) to use of a precoding matrix with the number of ports four or less from use of a precoding matrix with the number of ports more than four may be performed dynamically by a MAC CE/DCI.

Note that a UE may use (refer to) a common 8 TX UL codebook, regardless of an antenna layout (antenna configuration). A UE may use (refer to) a different 8 TX UL codebook per antenna layout (antenna configuration).

A UE may report UE capability information related to an antenna layout. For example, based on the UE capability information, a base station may transmit, to the UE, information specifying/identifying/configuring an 8 TX UL codebook for the UE to use. Based on the reported UE capability information and the received information specifying/identifying/configuring the 8 TX UL codebook, the UE may judge an 8 TX UL codebook to use.

According to the first embodiment described above, the 8 TX UL codebook is possible to be appropriately used.

### <Second Embodiment>

A second embodiment relates to an eight-port PC precoder for a UE having a capability of at least one four-port coherent group as in Case 1 or Case 2.

Note that, in the present disclosure, "having a capability of ..." and "supporting/reporting a capability of ..." may be interchangeably interpreted.

The eight-port PC precoder in the second embodiment may be based on an existing four-port precoder shown in FIGS. 1 to 4.

An eight-port one-layer PC precoder may be configured by inserting four zero elements in every column of a precoder selected from at least one of four-port one-layer PC precoders (TPMI indices = 4 to 11) and four-port one-layer FC precoders (TPMI indices = 12 to 27) in FIG. 1.

An eight-port two-layer PC precoder may be configured by inserting four zero elements in every column of a precoder selected from at least one of four-port two-layer PC precoders (TPMI indices = 6 to 13) and four-port two-layer FC precoders (TPMI indices = 14 to 21) in FIG. 2.

An eight-port three-layer PC precoder may be configured by inserting four zero elements in every column of a precoder selected from at least one of four-port three-layer PC precoders (TPMI indices = 1 to 2) and four-port three-layer FC precoders (TPMI indices = 3 to 6) in FIG. 3.

An eight-port four-layer PC precoder may be configured by inserting four zero elements in every column of a precoder selected from at least one of four-port four-layer PC precoders (TPMI indices = 1 to 2) and four-port four-layer FC precoders (TPMI indices = 3 to 4) in FIG. 4.

Note that positions (ports/elements) where the four zero elements are inserted may be at least one of the following:
- Positions with which existing precoder elements in existing Rel-15/16 NR are to be the first or last four elements of an eight-port PC precoder (for example, the last or first four elements of the eight-port PC precoder are zero inserted and the first or last four elements are the existing precoder elements)
- Positions of odd-numbered or even-numbered indices of an eight-port PC precoder (the four zero elements are inserted evenly (at regular intervals))
- Positions corresponding to port indices/element indices specified for (or related to) a coherent group

Note that, in the present disclosure, a port, an element, a position, and the like may be interchangeably interpreted.

For the eight-port PC precoder of the second embodiment, when one precoder is seen, the four zero elements inserted are at the same positions for respective columns. In other words, in a case where the eight-port PC precoder of the second embodiment is used, different layers are transmitted using a port of the same coherent group (specifically, one of the reported four-port coherent groups).

A UE may be notified of information for identifying an eight-port i-layer precoder (for example, information related to positions for the four zero elements to be inserted, information of a port index specified for (or related to) a coherent group), by using physical layer signaling (for example, DCI), higher layer signaling (for example, RRC signaling, MAC CE), a specific signal/channel (for example, PDCCH, PDSCH, reference signal), or a combination of these.

Note that, in the present disclosure, a coefficient (or an absolute value of components) of an eight-port PC precoder may be 1/√(the number of all elements in the precoder) or may be 1/√(the number of non-zero elements in the precoder). In a case where an eight-port PC precoder is configured based on one or more precoders (for example, existing precoders), a coefficient (or an absolute value of components) of an original precoder may be scaled (adjusted) such that the coefficient (or the absolute value of components) is 1/√(the number of all elements in the eight-port PC precoder) or 1/√(the number of non-zero elements in the eight-port PC precoder).

Note that adjusting to 1/√(the number of non-zero elements in the eight-port PC precoder) may correspond to a case that a UE has a capability of full power transmission or full power transmission (mode 0/1/2) is configured for the UE.

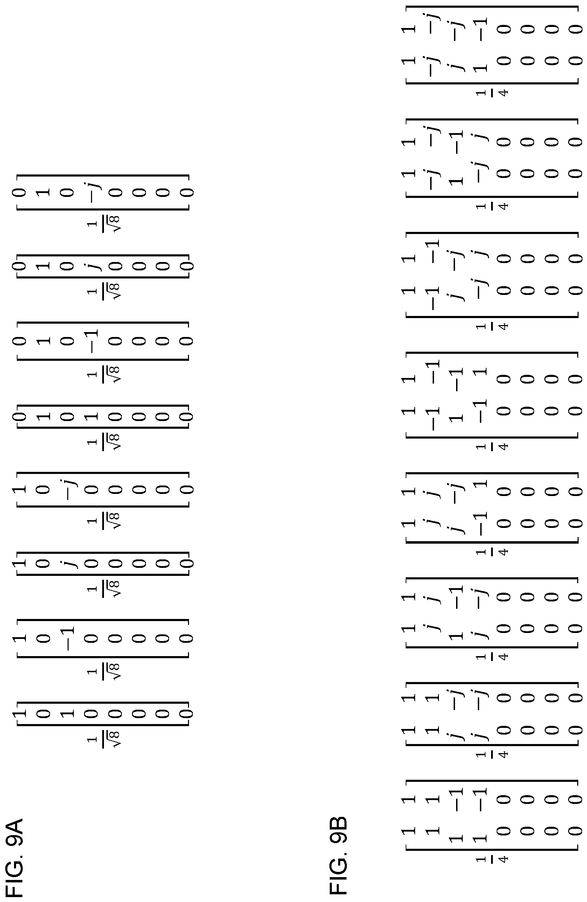

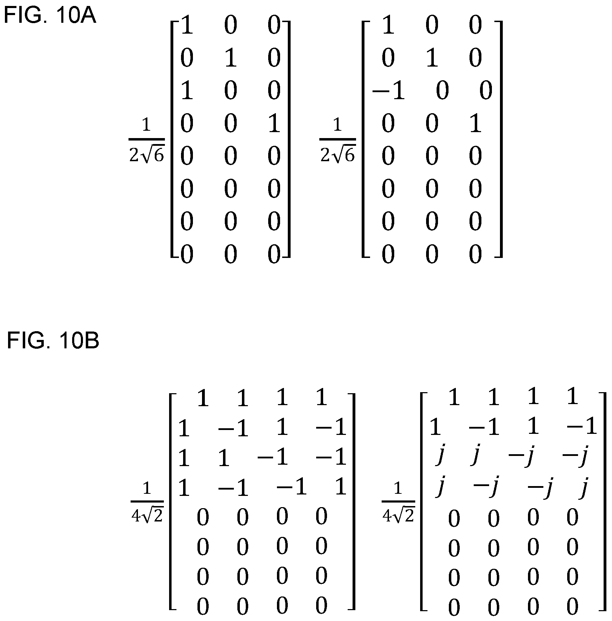

FIGS. 9A and 9B and FIGS. 10A and 10B are each a diagram to show an example of eight-port PC precoders according to the second embodiment. FIGS. 9A, 9B, 10A, and 10B respectively show eight-port one-, two-, three-, and four-layer PC precoders.

The eight-port one-layer PC precoders in FIG. 9A have the first four rows being the four-port one-layer PC precoders (TPMI indices = 4 to 11) of FIG. 1, and the last four rows with zero elements. Note that a UE may not be able to use (or support) all the PC precoders shown (this similarly applies to the PC precoders below).

The eight-port two-layer PC precoders in FIG. 9B have the first four rows being the four-port two-layer FC precoders (TPMI indices = 14 to 21) of FIG. 2, and the last four rows with zero elements.

The eight-port three-layer PC precoders in FIG. 10A have the first four rows being the four-port three-layer PC precoders (TPMI indices = 1 to 2) of FIG. 3, and the last four rows with zero elements.

The eight-port four-layer PC precoders in FIG. 10B have the first four rows being the four-port four-layer FC precoders (TPMI indices = 3 to 4) of FIG. 4, and the last four rows with zero elements.

### {Restriction for Precoder that Eight-port PC Precoder is Based on}

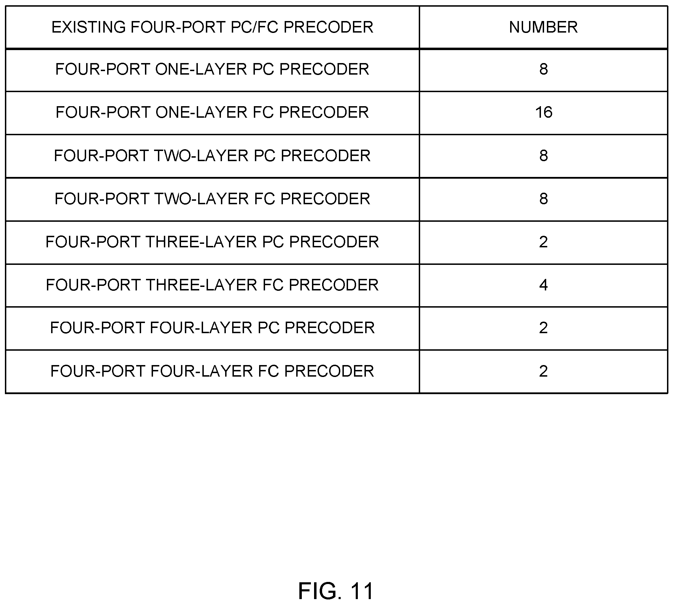

FIG. 11 is a diagram to show the numbers of existing four-port PC/FC precoders shown in FIGS. 1 to 4. In a case where precoders that eight-port i-layer PC precoders (i = 1 to 4) are based on are all of the four-port i-layer PC/FC precoders, the number of eight-port i-layer PC precoders is enormous, causing a concern of an increase in overhead related to notification of TPMI indices.

Thus, precoders that eight-port PC precoders are based on may be limited only to precoders that correspond to any one of the following:
- Existing four-port PC precoders
- Existing four-port FC precoders
- One or more precoders selected from existing four-port PC/FC precoders (for example, precoders specified in a specification)
- Existing four-port PC/FC precoders reported by a UE

Regarding the last restriction described above, a UE may report, to a network, information related to existing four-port PC/FC precoders available (supported) as bases for eight-port PC precoders by using UE capability information or may report the information upon request signaling from the network (for example, by using UCI/MAC CE).

In a case of reporting a capability of a four-port coherent group (the premise of the second embodiment), the UE may report, as the UE capability information, information related to the existing four-port PC/FC precoders.

Note that, in a case of reporting a capability of a two-port coherent group (the premise of a fourth embodiment to be described below), the UE may report, as the UE capability information, information related to existing two-port PC/FC precoders available (supported) as bases for eight-port PC precoders.

The information related to the four- (two-) port PC/FC precoders may be one or more values related to available precoders or TPMI indices or may be a bitmap related to the available precoders or TPMI indices. The one or more values related to the available precoders or TPMI indices may be information indicating a group of available precoders (TPMI indices corresponding to the precoders) such as UE capability information (ul-FullPwrMode2-TPMIGroup-r16, which may be referred to as TPMI group capability information) related to a TPMI group for which full power transmission is possible in relation to Mode 2 in Rel. 16. The group of available precoders may be defined in a specification in advance.

According to the second embodiment described above, a UE having a capability of a four-port coherent group is possible to appropriately use an eight-port PC precoder.

### <Third Embodiment>

A third embodiment relates to an eight-port PC precoder for a UE having a capability of two four-port coherent groups as in Case 1.

The eight-port PC precoder in the third embodiment may be based on an existing four-port precoder shown in FIGS. 1 to 4, in other words, may be based on any one of the eight-port one- to four-layer PC precoders in the second embodiment.

Specifically, an eight-port i-layer PC precoder in the third embodiment may be configured by combining (or coupling or connecting) an eight-port x-layer PC precoder in the second embodiment and an eight-port y-layer PC precoder in the second embodiment. Here, x and y are natural numbers that meet x + y = i. The eight-port x-layer PC precoder and eight-port y-layer PC precoder that are combinable meet a condition that the positions where four zero elements are inserted for the eight-port x-layer PC precoder are different from (are not overlapping with, or are positions orthogonal to, or include at least one position different from) that for the eight-port y-layer PC precoder.

In other words, between the eight-port x-layer PC precoder and eight-port y-layer PC precoder that are combinable, positions of non-zero elements in the column direction are different from (are not overlapping, or are positions orthogonal to, or include at least one position different from) each other.

Note that the eight-port i-layer PC precoder may correspond to a matrix obtained by coupling the eight-port x-layer PC precoder and eight-port y-layer PC precoder in the horizontal direction and scaling (adjusting) coefficients (or absolute values of components) of the precoders to 1/√(the number of all elements in the eight-port i-layer PC precoder) or 1/√(the number of non-zero elements in the eight-port i-layer PC precoder). In the eight-port i-layer PC precoder, the eight-port x-layer PC precoder may be positioned to a small row index as compared to the eight-port y-layer PC precoder.

For example, an eight-port five-layer PC precoder (i = 5) may be configured by combining an eight-port four-layer PC precoder and an eight-port one-layer PC precoder in the second embodiment or may be configured by combining an eight-port three-layer PC precoder and an eight-port two-layer PC precoder in the second embodiment.

An eight-port six-layer PC precoder (i = 6) may be configured by combining an eight-port four-layer PC precoder and an eight-port two-layer PC precoder in the second embodiment or may be configured by combining an eight-port three-layer PC precoder and an eight-port three-layer PC precoder in the second embodiment.

An eight-port seven-layer PC precoder (i = 7) may be configured by combining an eight-port four-layer PC precoder and an eight-port three-layer PC precoder in the second embodiment.

An eight-port eight-layer PC precoder (i = 8) may be configured by combining an eight-port four-layer PC precoder and an eight-port four-layer PC precoder in the second embodiment.

In the eight-port i-layer PC precoder of the third embodiment, a layer corresponding to the eight-port x-layer PC precoder is transmitted using a port of a first four-port coherent group out of the two four-port coherent groups described above, and a layer corresponding to the eight-port y-layer PC precoder is transmitted using a port of a second four-port coherent group out of the two four-port coherent groups described above.

Note that, in consideration of suppression of overhead related to notification of a TPMI index, the eight-port x-layer PC precoder and eight-port y-layer PC precoder that are combinable may be restricted. For example, in a case of x = y, for the eight-port x-layer PC precoder and eight-port y-layer PC precoder that are combinable, existing four-port PC/FC precoders that they are based on may be limited to the same precoder.

In the case of x = y, a TPMI index corresponding to an existing four-port PC/FC precoder that the eight-port x-layer PC precoder is based on may be greater than a TPMI index corresponding to an existing four-port PC/FC precoder that the eight-port y-layer PC precoder is based on.

In a case that i is an odd number, restriction of x > y may be made.

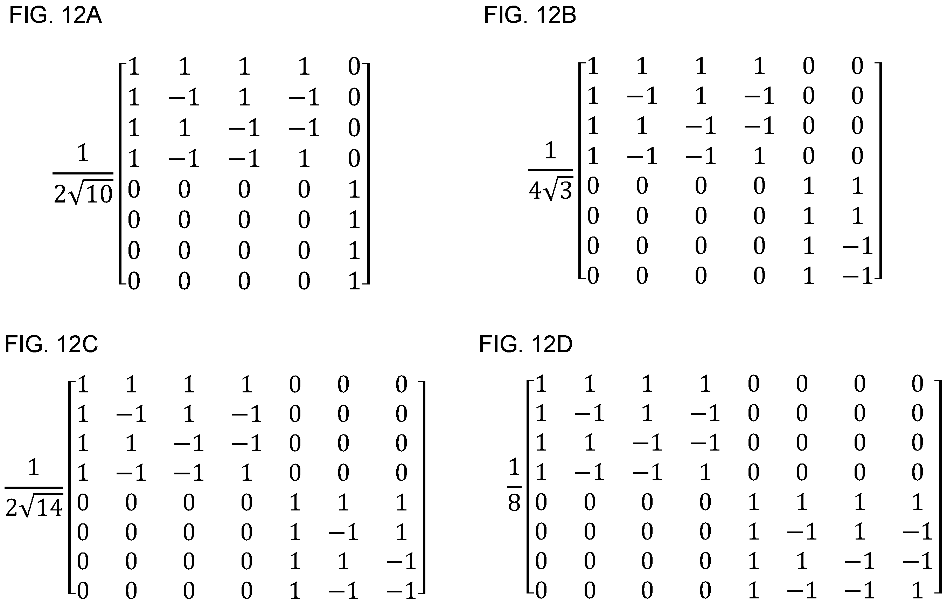

FIGS. 12A to 12D are each a diagram to show an example of an eight-port PC precoder according to the third embodiment. FIGS. 12A, 12B, 12C, and 12D respectively show eight-port five-, six-, seven-, and eight-layer PC precoders.

The eight-port five-layer PC precoder in FIG. 12A has the first four columns being an eight-port four-layer PC precoder and the last one column being an eight-port one-layer PC precoder. The eight-port four-layer PC precoder has the last four rows with zero elements inserted. The eight-port one-layer PC precoder has the first four rows with zero elements inserted.

The eight-port six-layer PC precoder in FIG. 12B has the first four columns being an eight-port four-layer PC precoder and the last two columns being an eight-port two-layer PC precoder. The eight-port four-layer PC precoder has the last four rows with zero elements inserted. The eight-port two-layer PC precoder has the first four rows with zero elements inserted.

The eight-port seven-layer PC precoder in FIG. 12C has the first four columns being an eight-port four-layer PC precoder and the last three columns being an eight-port three-layer PC precoder. The eight-port four-layer PC precoder has the last four rows with zero elements inserted. The eight-port three-layer PC precoder has the first four rows with zero elements inserted.

The eight-port eight-layer PC precoder in FIG. 12D has the first four columns being an eight-port four-layer PC precoder and the last four columns being an eight-port four-layer PC precoder. The first eight-port four-layer PC precoder has the last four rows with zero elements inserted. The second eight-port four-layer PC precoder has the first four rows with zero elements inserted.

Note that the eight-port eight-layer PC precoder in FIG. 12D conforms to the restriction described above. In this example, x = y = 4, and the combined two eight-port four-layer PC precoders are each a precoder configured based on the precoder of TPMI index = 3 in FIG. 4.

### {Variation of Third Embodiment}

Although cases of i = 5 to 8 have been mainly described above, the eight-port i-layer PC precoder of the third embodiment may be described similarly for cases of i = 2 to 4.

For example, an eight-port two-layer PC precoder (i = 2) may be configured by combining an eight-port one-layer PC precoder and an eight-port one-layer PC precoder in the second embodiment.

An eight-port three-layer PC precoder (i = 3) may be configured by combining an eight-port two-layer PC precoder and an eight-port one-layer PC precoder in the second embodiment.

An eight-port four-layer PC precoder (i = 4) may be configured by combining an eight-port three-layer PC precoder and an eight-port one-layer PC precoder in the second embodiment or may be configured by combining an eight-port two-layer PC precoder and an eight-port two-layer PC precoder in the second embodiment.

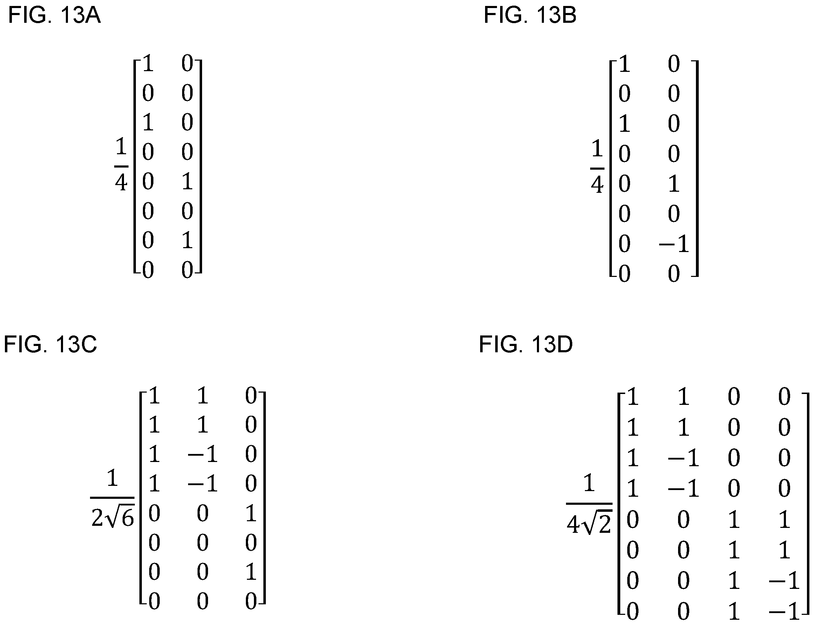

FIGS. 13A to 13D are each a diagram to show an example of an eight-port PC precoder according to the third embodiment. FIGS. 13A, 13B, 13C, and 13D respectively show eight-port two-, two-, three-, and four-layer PC precoders.

The eight-port two-layer PC precoders in FIGS. 13A and 13B each have the first one column being an eight-port one-layer PC precoder and the last one column being an eight-port one-layer PC precoder. The first eight-port one-layer PC precoder has the last four rows with zero elements inserted. The second eight-port one-layer PC precoder has the first four rows with zero elements inserted.

The eight-port three-layer PC precoder in FIG. 13C has the first two columns being an eight-port two-layer PC precoder and the last one column being an eight-port one-layer PC precoder. The eight-port two-layer PC precoder has the last four rows with zero elements inserted. The eight-port one-layer PC precoder has the first four rows with zero elements inserted.

The eight-port four-layer PC precoder in FIG. 13D has the first two columns being an eight-port two-layer PC precoder and the last two columns being an eight-port two-layer PC precoder. The first eight-port two-layer PC precoder has the last four rows with zero elements inserted. The second eight-port two-layer PC precoder has the first four rows with zero elements inserted.

Note that the eight-port two-layer PC precoder in FIG. 13A and the eight-port four-layer PC precoder in FIG. 13D each conform to the restriction described above that the combined two PC precoders are based on the same existing four-port PC/FC precoder.

According to the third embodiment described above, a UE having a capability of a four-port coherent group is possible to appropriately use an eight-port PC precoder.

### <Fourth Embodiment>

A fourth embodiment relates to an eight-port PC precoder for a UE having a capability of a two-port coherent group as in Case 2 or Case 3.

The eight-port PC precoder in the fourth embodiment may be based on an existing two-port precoder shown in FIGS. 5A and 5B.

An eight-port one-layer PC precoder may be configured by inserting six zero elements in every column of a precoder selected from two-port one-layer FC precoders (TPMI indices = 2 to 5) in FIG. 5A.

An eight-port two-layer PC precoder may be configured by inserting six zero elements in every column of a precoder selected from two-port two-layer FC precoders (TPMI indices = 1 to 2) in FIG. 5B.

Note that positions (ports/elements) where the six zero elements are inserted may be at least one of the following:
- Positions with which existing precoder elements in existing Rel-15/16 NR correspond to the first or last six elements of an eight-port PC precoder (for example, the last or first six elements of the eight-port PC precoder are zeros inserted and the first and last two elements correspond to the existing precoder elements)
- Positions corresponding to port indices/element indices specified for (or related to) a coherent group

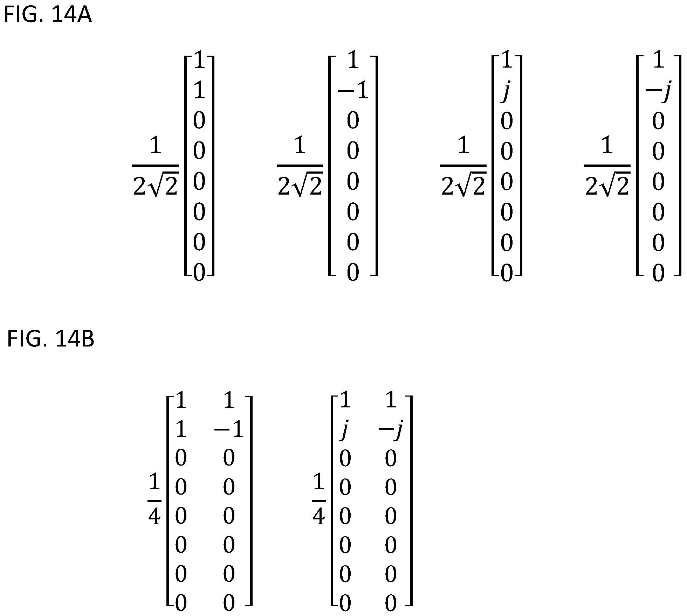

FIGS. 14A and 14B are each a diagram to show an example of eight-port PC precoders according to the second embodiment. FIGS. 14A and 14B respectively show eight-port one- and two-layer PC precoders.

The eight-port one-layer PC precoders in FIG. 14A have the first two rows being the two-port one-layer FC precoders (TPMI indices = 2 to 5) of FIG. 5, and the last six rows with zero elements.

The eight-port two-layer PC precoders in FIG. 14B have the first two rows being the two-port two-layer FC precoders (TPMI indices = 1 to 2) of FIG. 5, and the last six rows with zero elements.

Note that an eight-port PC precoder for a UE having a capability of two two-port coherent groups may be configured based on the eight-port one- to two-layer PC precoders described above in the fourth embodiment.

Specifically, an eight-port i-layer PC precoder in the fourth embodiment may be configured by combining (or coupling or connecting) an eight-port x-layer PC precoder in the fourth embodiment and an eight-port y-layer PC precoder in the fourth embodiment. Here, x and y are natural numbers that meet x + y = i. The eight-port x-layer PC precoder and eight-port y-layer PC precoder that are combinable meet a condition that positions where six zero elements are inserted for the eight-port x-layer PC precoder are different from (are not overlapping with, or are positions orthogonal to, or include at least one position different from) that for the eight-port y-layer PC precoder.

In other words, between the eight-port x-layer PC precoder and eight-port y-layer PC precoder that are combinable, positions of non-zero elements in the column direction are different from (are not overlapping, or are positions orthogonal to, or include at least one position different from) each other.

For example, an eight-port two-layer PC precoder (i = 2) may be configured by combining an eight-port one-layer PC precoder and an eight-port one-layer PC precoder in the fourth embodiment.

An eight-port three-layer PC precoder (i = 3) may be configured by combining an eight-port two-layer PC precoder and an eight-port one-layer PC precoder in the fourth embodiment.

An eight-port four-layer PC precoder (i = 4) may be configured by combining an eight-port two-layer PC precoder and an eight-port two-layer PC precoder in the fourth embodiment.

Note that, for the fourth embodiment, the details described in the second/third embodiment (for example, restriction for precoder selection) may be applied similarly (by replacing the terms if necessary) (this similarly applies to fifth and sixth embodiments to be described below).

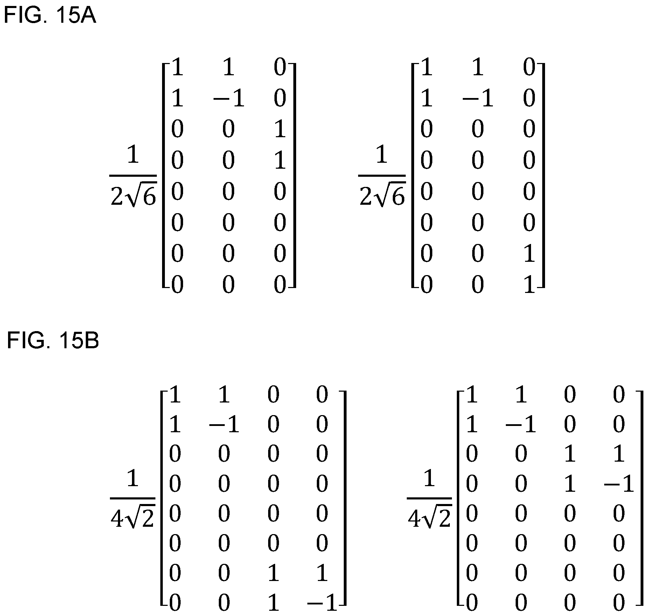

FIGS. 15A and 15B are each a diagram to show an example of eight-port PC precoders according to the fourth embodiment. FIGS. 15A and 15B respectively show eight-port three- and four-layer PC precoders.

The eight-port three-layer PC precoders in FIG. 15A each have the first two columns being an eight-port two-layer PC precoder and the last one column being an eight-port one-layer PC precoder. Non-zero elements of the eight-port two-layer PC precoder are in the first two rows, while non-zero elements of the eight-port one-layer PC precoder are in positions different from the first two rows.

The eight-port four-layer PC precoders in FIG. 15B each have the first two columns being an eight-port two-layer PC precoder and the last two columns being an eight-port two-layer PC precoder. Non-zero elements of the first eight-port two-layer PC precoder are in the first two rows, while non-zero elements of the second eight-port two-layer PC precoder are in positions different from the first two rows.

Note that the eight-port four-layer PC precoder on the left in FIG. 15B conforms to the restriction described above. In this example, x = y = 2, and the combined two eight-port two-layer PC precoders are each a precoder configured based on the precoder of TPMI index = 1 of FIG. 5B.

According to the fourth embodiment described above, a UE having a capability of a two-port coherent group is possible to appropriately use an eight-port PC precoder.

### <Fifth Embodiment>

A fifth embodiment relates to an eight-port PC precoder for a UE having a capability of four two-port coherent groups as in Case 3.

The eight-port PC precoder in the fifth embodiment may be based on any one of the eight-port one- to two-layer PC precoders in the fourth embodiment.

Specifically, an eight-port i-layer PC precoder (i = 5 to 8) in the fifth embodiment may be configured by combining (or coupling or connecting) one or more of the eight-port one- to two-layer PC precoders in the fourth embodiment. Between such eight-port one- to two-layer PC precoders that are combinable, a condition is met that positions where six zero elements are inserted are different from (are not overlapping, or are positions orthogonal to, or include at least one position different from) each other.

In other words, between the eight-port one- to two-layer PC precoders that are combinable, positions of non-zero elements in the column direction are different from (are not overlapping, or are positions orthogonal to, or include at least one position different from) each other.

Note that the eight-port i-layer PC precoder may correspond to a matrix obtained by coupling the eight-port one- to two-layer PC precoders in the horizontal direction and scaling (adjusting) coefficients (or absolute values of components) of the precoders to 1/√(the number of all elements in the eight-port i-layer PC precoder) or 1/√(the number of non-zero elements in the eight-port i-layer PC precoder).

For example, an eight-port five-layer PC precoder (i = 5) may be configured by combining two eight-port two-layer PC precoders and one eight-port one-layer PC precoder in the fourth embodiment.

An eight-port six-layer PC precoder (i = 6) may be configured by combining three eight-port two-layer PC precoders in the fourth embodiment.

An eight-port seven-layer PC precoder (i = 7) may be configured by combining three eight-port two-layer PC precoders and one eight-port one-layer PC precoder in the fourth embodiment.

An eight-port eight-layer PC precoder (i = 8) may be configured by combining four eight-port two-layer PC precoders in the fourth embodiment.

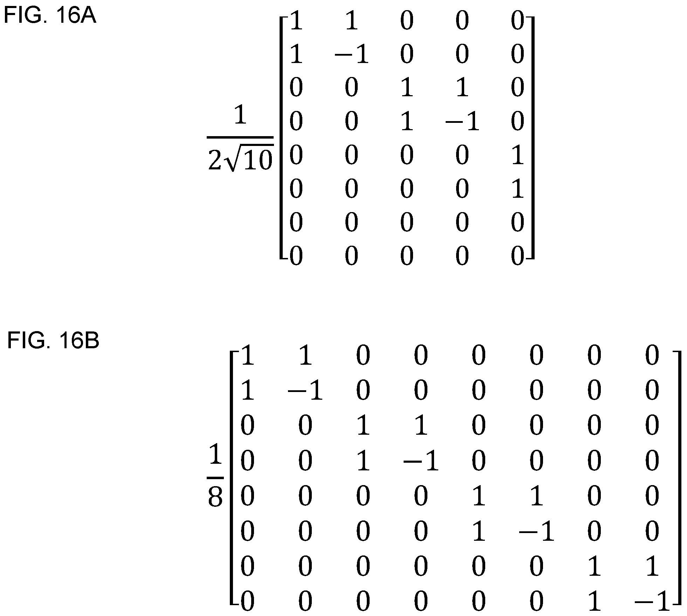

FIGS. 16A and 16B are each a diagram to show an example of an eight-port PC precoder according to the fifth embodiment. FIGS. 16A and 16B respectively show eight-port five- and eight-layer PC precoders.

The eight-port five-layer PC precoder in FIG. 16A has the first two columns being an eight-port two-layer PC precoder, the next two columns being an eight-port two-layer PC precoder, and the last one column being an eight-port one-layer PC precoder. Non-zero elements of the first eight-port two-layer PC precoder are in the first and second rows, non-zero elements of the second eight-port two-layer PC precoder are in the third and fourth rows, and non-zero elements of the eight-port one-layer PC precoder are in the fifth and sixth rows.

Note that the eight-port five-layer PC precoder in FIG. 16A conforms to a restriction that the combined two eight-port two-layer PC precoders are based on the same existing two-port FC precoder.

In the eight-port eight-layer PC precoder of FIG. 16B, every two columns correspond to a respective one of different eight-port two-layer PC precoders. Non-zero elements of a j-th eight-port two-layer PC precoder are in the (2j - 1)-th and 2j-th rows.

Note that the eight-port eight-layer PC precoder in FIG. 16B conforms to a restriction that the combined four eight-port two-layer PC precoders are based on the same existing two-port FC precoder.

According to the fifth embodiment described above, a UE having a capability of four two-port coherent groups is possible to appropriately use an eight-port PC precoder.

### <Sixth Embodiment>

A sixth embodiment relates to an eight-port PC precoder for a UE having a capability of a four-port coherent group and a two-port coherent group as in Case 2.

The eight-port PC precoder in the sixth embodiment may be based on an existing two-port precoder shown in FIGS. 5A and 5B (or an eight-port PC precoder in the fourth embodiment) and an existing four-port precoder shown in FIGS. 1 to 4 (or an eight-port PC precoder in the second/third embodiment).

Specifically, an eight-port i-layer PC precoder (i = 1 to 8) in the sixth embodiment may be configured by combining (or coupling or connecting) one or more of the eight-port one- to four-layer PC precoders in the second/third embodiment and one or more of the eight-port one- to four-layer PC precoders in the fourth embodiment. Between such eight-port one- to four-layer PC precoders that are combinable, a condition is met that positions where four/six zero elements are inserted are different from (are not overlapping, or are positions orthogonal to, or include at least one position different from) each other.

In other words, between eight-port j-layer PC precoders that are combinable (j = 1 to 4), positions of non-zero elements in the column direction are different from (are not overlapping, or are positions orthogonal to, or include at least one position different from) each other.

A UE transmits a layer corresponding to one or more of the eight-port one- to four-layer PC precoders in the second/third embodiment by using a port of a four-port coherent group, and transmits a layer corresponding to one or more of the eight-port one- to four-layer PC precoders in the fourth embodiment by using a port of a two-port coherent group.

Note that the eight-port i-layer PC precoder in the sixth embodiment may correspond to a matrix obtained by coupling the eight-port one- to four-layer PC precoders in the horizontal direction and scaling (adjusting) coefficients (or absolute values of components) of the precoders to 1/√(the number of all elements in the eight-port i-layer PC precoder) or 1/√(the number of non-zero elements in the eight-port i-layer PC precoder).

For example, the eight-port one- to four-layer PC precoders in the sixth embodiment may be one or more of the eight-port one- to four-layer PC precoders in the second/third embodiment, may be one or more of the eight-port one to four layers in the second/third embodiment, or may be configured by combining these.

An eight-port five-layer PC precoder in the sixth embodiment may be configured by combining an eight-port four-layer PC precoder (corresponding to a four-port coherent group) in the second/third embodiment and an eight-port one-layer PC precoder (corresponding to one two-port coherent group) in the fourth embodiment or may be configured by combining an eight-port one-layer PC precoder (corresponding to a four-port coherent group) in the second/third embodiment and an eight-port four-layer PC precoder (corresponding to two two-port coherent groups) in the fourth embodiment.

An eight-port six-layer PC precoder in the sixth embodiment may be configured by combining an eight-port four-layer PC precoder (corresponding to a four-port coherent group) in the second/third embodiment and an eight-port two-layer PC precoder (corresponding to one two-port coherent group) in the fourth embodiment or may be configured by combining an eight-port two-layer PC precoder (corresponding to a four-port coherent group) in the second/third embodiment and an eight-port four-layer PC precoder (corresponding to two two-port coherent groups) in the fourth embodiment.

An eight-port seven-layer PC precoder in the sixth embodiment may be configured by combining an eight-port four-layer PC precoder (corresponding to a four-port coherent group) in the second/third embodiment and an eight-port three-layer PC precoder (corresponding to two two-port coherent groups) in the fourth embodiment or may be configured by combining an eight-port three-layer PC precoder (corresponding to a four-port coherent group) in the second/third embodiment and an eight-port four-layer PC precoder (corresponding to two two-port coherent groups) in the fourth embodiment.

An eight-port eight-layer PC precoder in the sixth embodiment may be configured by combining an eight-port four-layer PC precoder (corresponding to a four-port coherent group) in the second/third embodiment and an eight-port four-layer PC precoder (corresponding to two two-port coherent groups) in the fourth embodiment.

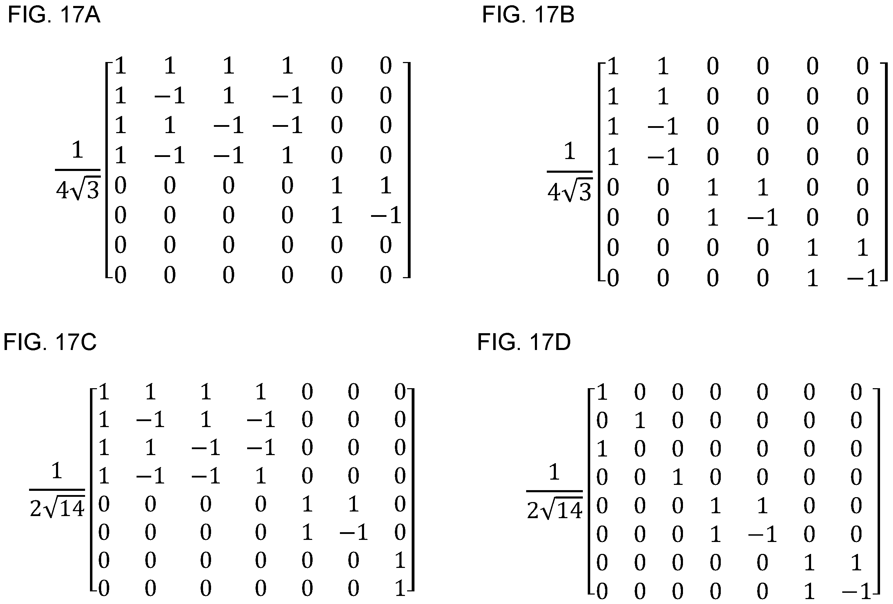

FIGS. 17A to 17D are each a diagram to show an example of an eight-port PC precoder according to the sixth embodiment. FIGS. 17A, 17B, 17C, and 17D respectively show eight-port six-, six-, seven-, and seven-layer PC precoders.

The eight-port six-layer PC precoder in FIG. 17A has the first four columns being an eight-port four-layer PC precoder (corresponding to a four-port coherent group) in the second/third embodiment, and the last two columns being an eight-port two-layer PC precoder (corresponding to one two-port coherent group) in the fourth embodiment.

The eight-port six-layer PC precoder in FIG. 17B has the first two columns being an eight-port two-layer PC precoder (corresponding to a four-port coherent group) in the second/third embodiment, the next two columns being an eight-port two-layer PC precoder (corresponding to one two-port coherent group) in the fourth embodiment, and the last two columns being an eight-port two-layer PC precoder (corresponding to another two-port coherent group) in the fourth embodiment.

The eight-port seven-layer PC precoder in FIG. 17C has the first four columns being an eight-port four-layer PC precoder (corresponding to a four-port coherent group) in the second/third embodiment, the next two columns being an eight-port two-layer PC precoder (corresponding to one two-port coherent group) in the fourth embodiment, and the last one column being an eight-port one-layer PC precoder (corresponding to another two-port coherent group) in the fourth embodiment.

The eight-port seven-layer PC precoder in FIG. 17D has the first three columns being an eight-port three-layer PC precoder (corresponding to a four-port coherent group) in the second/third embodiment, the next two columns being an eight-port two-layer PC precoder (corresponding to one two-port coherent group) in the fourth embodiment, and the last two columns being an eight-port two-layer PC precoder (corresponding to another two-port coherent group) in the fourth embodiment.

According to the sixth embodiment described above, a UE having a capability of a four-port coherent group and a two-port coherent group is possible to appropriately use an eight-port PC precoder.

### <Supplement>

The present disclosure covers an embodiment that applies/replaces a method of determining/selecting an eight-port PC precoder in the embodiments described above to/with determination/selection of an eight-port NC precoder. In this case, a PC/FC precoder in the embodiments described above may be interpreted as an NC precoder.

For example, a UE may, in accordance with the second embodiment, use an eight-port NC precoder based on an existing four-port NC precoder shown in FIGS. 1 to 4. A UE may, in accordance with the fourth embodiment, use an eight-port PC precoder based on an existing two-port precoder shown in FIGS. 5A and 5B.

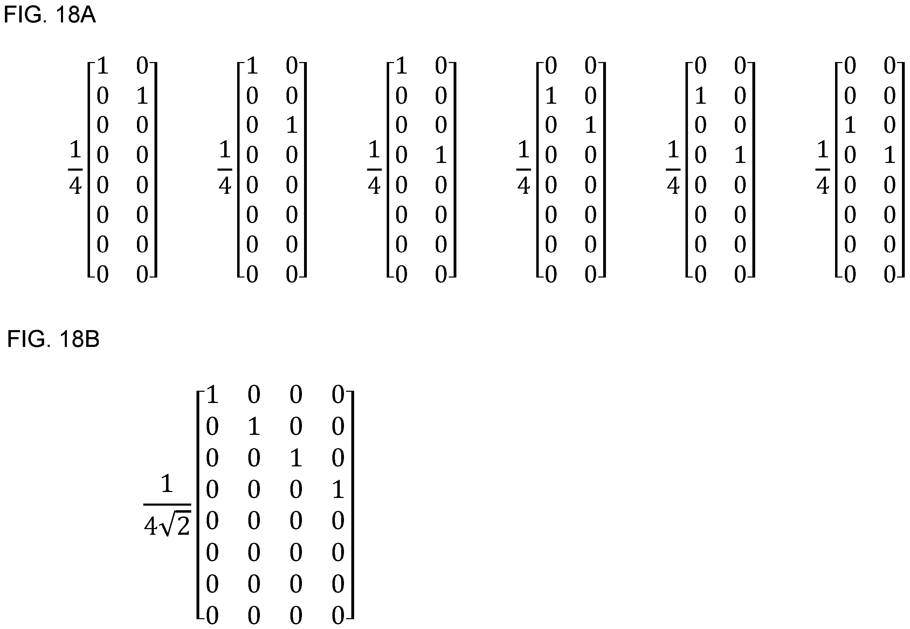

FIGS. 18A and 18B are each a diagram to show an example of an eight-port NC precoder(s) according to one embodiment of the present disclosure. FIGS. 18A and 18B respectively show eight-port two- and four-layer NC precoders.

The eight-port two-layer NC precoders in FIG. 18A have the first four rows being the four-port two-layer NC precoders (TPMI indices = 0 to 5) of FIG. 2, and the last four rows with zero elements inserted.

The eight-port four-layer NC precoder in FIG. 18B has the first four rows being the four-port four-layer NC precoder (TPMI index = 0) of FIG. 4, and the last four rows with zero elements inserted.

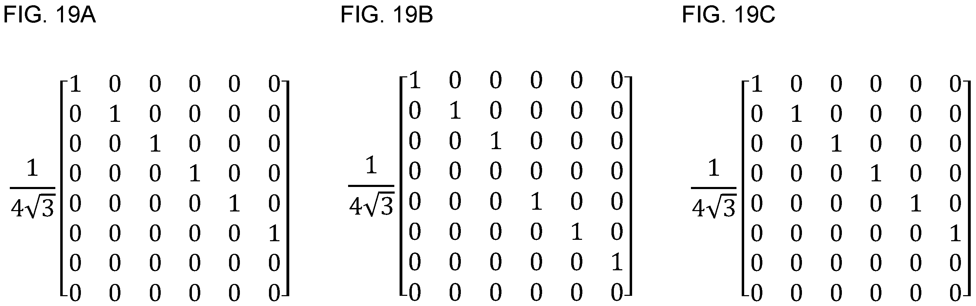

FIGS. 19A to 19C are each a diagram to show an example of an eight-port NC precoder according to one embodiment of the present disclosure. FIGS. 19A to 19C each show an eight-port six-layer NC precoder.

The eight-port six-layer NC precoder in FIG. 19A has the first four columns being an eight-port four-layer NC precoder and the last two columns being an eight-port two-layer NC precoder. The eight-port four-layer NC precoder is configured using an existing four-port four-layer NC precoder and has the last four rows with zero elements inserted. The eight-port two-layer NC precoder is configured using an existing four-port two-layer NC precoder and has the first four rows with zero elements inserted.

The eight-port six-layer NC precoder in FIG. 19B has the first three columns being an eight-port three-layer NC precoder and the last three columns being an eight-port three-layer NC precoder. The first eight-port four-layer NC precoder is configured using an existing four-port three-layer NC precoder and has the last four rows with zero elements inserted. The second eight-port three-layer NC precoder is configured using an existing four-port three-layer NC precoder and has the first four rows with zero elements inserted.

The eight-port six-layer NC precoder in FIG. 19C has the first four columns being an eight-port four-layer NC precoder and the last two columns being an eight-port two-layer NC precoder. The eight-port four-layer NC precoder is configured using an existing four-port four-layer NC precoder and has the last four rows with zero elements inserted. The eight-port two-layer NC precoder is configured using an existing four-port two-layer NC precoder and has the first four and last two rows with zero elements inserted (as a result, FIG. 19C is the same as FIG. 19A).

Although an eight-port PC precoder is determined based on an existing two-/four-port PC precoder in the embodiment described above, an eight-port PC precoder may be determined based on a non-existing two-/four-port PC precoder.

Note that the number "8" in the present disclosure may be interpreted as any number greater than 4 (for example, 6, 10, 12, 16, ...) or may be interpreted as any number equal to or smaller than 4 (for example, 1, 2, 3, 4). In a case of such interpretation being made, any number premising "8" in the present disclosure may be interpreted as appropriate. It should be understood by a person skilled in the art that such interpretation is described in the present disclosure. For example, in a case where "8" is interpreted as "6," an eight-port i-layer PC precoder configured by inserting four (or six) rows of zero elements in an existing four- (or two-) port PC/FC precoder may be interpreted as a six-port i-layer PC precoder configured by inserting two (or four) rows of zero elements.

Note that at least one of the above-described embodiments may be applied only to a UE that has reported specific UE capability or that supports the specific UE capability.

The specific UE capability may indicate at least one of the following:
- Support of processing/operation/control/information related to at least one of the embodiments described above
- Support of PUSCH transmission using more than four antenna ports
- Support of an eight-port m-layer NC/PC/FC precoder (m = 1, 2, ...)
- Support of (determination of) an eight-port PC precoder based on an existing two-/four-port NC/PC/FC precoder
- Coherent port
- Coherent group
- Existing two-/four-port PC/FC precoder that is possible to be used as a base for (that supports) an eight-port PC precoder

The specific UE capability may be a capability applied over all the frequencies (commonly irrespective of frequency), a capability per frequency (for example, cell, band, BWP), a capability per frequency range (for example, FR1, FR2, FR3, FR4, FR5), or a capability per subcarrier spacing.

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied to a case where a UE is configured with specific information related to any one of the above-described embodiments by higher layer signaling. For example, the specific information may be configuration information for a PUSCH using more than four antenna ports, information indicating use of a precoder determination/selection/judgement method in at least one of the embodiments described above, any RRC parameter for a specific release (for example, Rel. 18), or the like.

Based on the specific information received, a UE may switch an eight-port PC precoder to be used.

In a case where a UE does not support at least one of the specific UE capabilities or is not configured with the specific information, the UE may apply Rel-15/16 operation, for example.

### (Supplementary Note)

Regarding one embodiment of the present disclosure, the following supplementary notes of the invention will be given.

### {Supplementary Note 1}

A terminal including:
a control section that judges an eight-port partial-coherent precoder on the basis of at least one of a four-port precoder and a two-port precoder; and
a transmitting section that performs uplink transmission on the basis of the eight-port partial-coherent precoder.

### {Supplementary Note 2}

The terminal according to supplementary note 1, wherein
the control section, when having a capability supporting a four-port coherent group, judges the eight-port partial-coherent precoder with the number of layers equal to or less than four on the basis of a four-port precoder, and
the transmitting section transmits transmission of every layer of the eight-port partial-coherent precoder by using a port of the four-port coherent group.

### {Supplementary Note 3}

The terminal according to supplementary note 1 or 2, wherein
the control section, when having a capability supporting two four-port coherent groups, judges the eight-port partial-coherent precoder with the number of layers equal to or more than five on the basis of a first precoder of four-port and a second precoder of four-port, and
the transmitting section transmits transmission of a layer corresponding to the first precoder of the eight-port partial-coherent precoder by using a port of a first four-port coherent group and transmits transmission of a layer corresponding to the second precoder of the eight-port partial-coherent precoder by using a port of a second four-port coherent group.

### {Supplementary Note 4}

The terminal according to any one of supplementary notes 1 to **3,** wherein
the control section, when having a capability supporting a two-port coherent group, judges the eight-port partial-coherent precoder with the number of layers equal to or less than two on the basis of a two-port precoder, and
the transmitting section transmits transmission of every layer of the eight-port partial-coherent precoder by using a port of the two-port coherent group.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

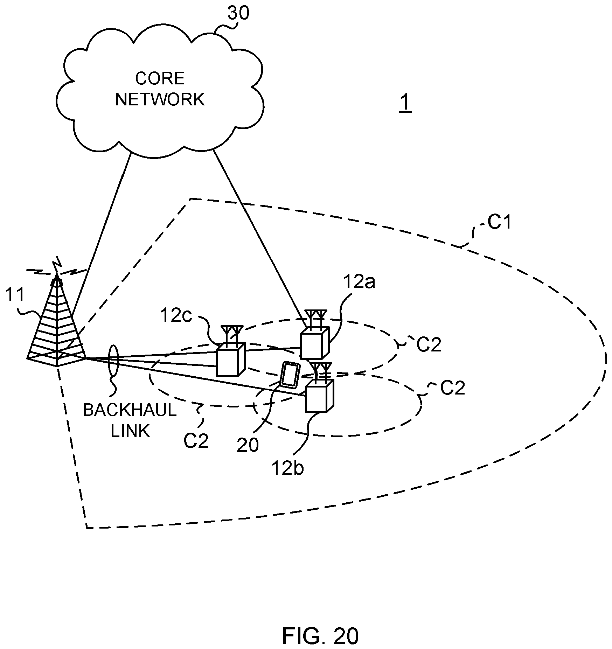

FIG. 20 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme for UL and DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," or the like, and that DCI for scheduling the PUSCH may be referred to as "UL grant," "UL DCI," or the like. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for the PBCH) may be referred to as an SS/PBCH block, an SS Block (SSB), or the like. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

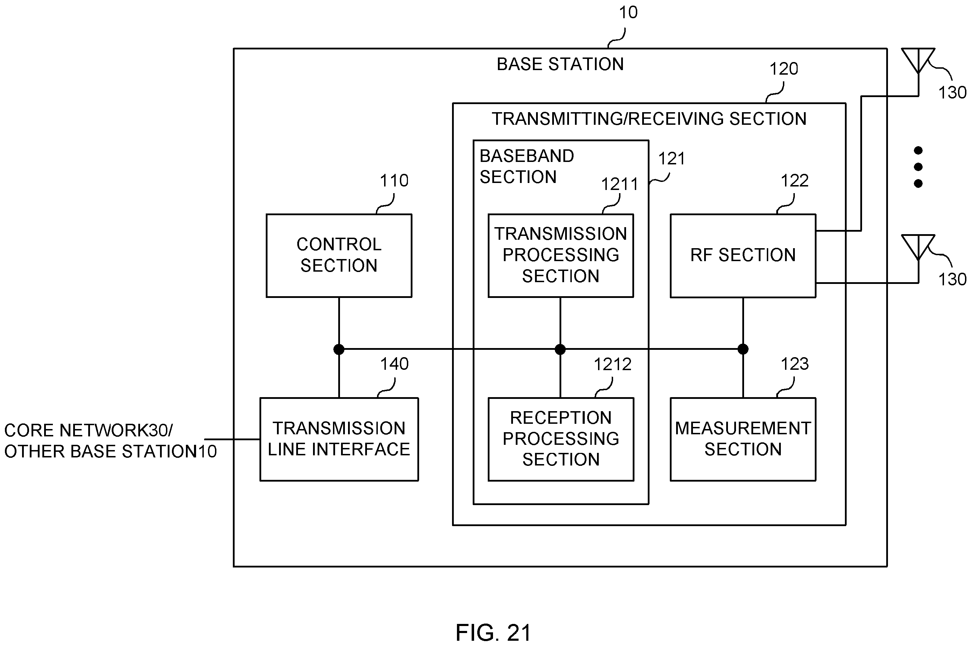

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and the like, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and the like, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, configuration information to cause an eight-port partial-coherent precoder to be judged based on at least one of a four-port precoder and a two-port precoder (for example, information indicating use of a precoder determination/selection/judgement method in at least one of the embodiments described above).

The transmitting/receiving section 120 may receive uplink transmission transmitted based on the eight-port partial-coherent precoder.

### (User Terminal)

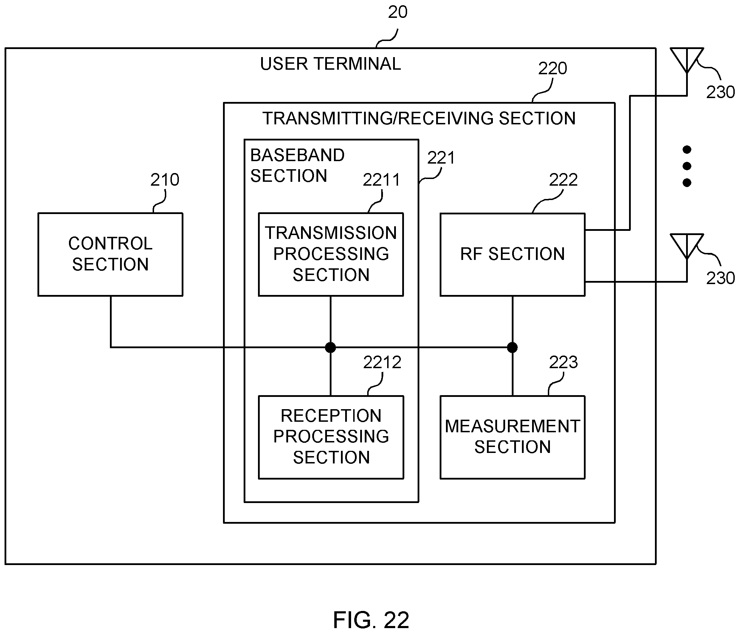

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and the like, for example, on data, control information, and the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and the like, based on the received signal. The measurement section 223 may measure a received power (for example, RSRP), a received quality (for example, RSRQ, SINR, SNR), a signal strength (for example, RSSI), channel information (for example, CSI), and the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may judge an eight-port partial-coherent precoder on the basis of at least one of a four-port precoder and a two-port precoder.

The transmitting/receiving section 220 may perform uplink transmission on the basis of the eight-port partial-coherent precoder.

When the user terminal 20 has a capability supporting a four-port coherent group, the control section 210 may judge the eight-port partial-coherent precoder with the number of layers equal to or less than four on the basis of a four-port precoder. The transmitting/receiving section 220 may transmit transmission of every layer of the eight-port partial-coherent precoder by using a port of the four-port coherent group.

When the user terminal 20 has a capability supporting two four-port coherent groups, the control section 210 may judge the eight-port partial-coherent precoder with the number of layers equal to or more than five on the basis of a first precoder of four-port and a second precoder of four-port. The transmitting/receiving section 220 may transmit transmission of a layer corresponding to the first precoder of the eight-port partial-coherent precoder by using a port of a first four-port coherent group and transmit transmission of a layer corresponding to the second precoder of the eight-port partial-coherent precoder by using a port of a second four-port coherent group.

When the user terminal 20 has a capability supporting a two-port coherent group, the control section 210 may judge the eight-port partial-coherent precoder with the number of layers equal to or less than two on the basis of a two-port precoder. The transmitting/receiving section 220 may transmit transmission of every layer of the eight-port partial-coherent precoder by using a port of the two-port coherent group.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

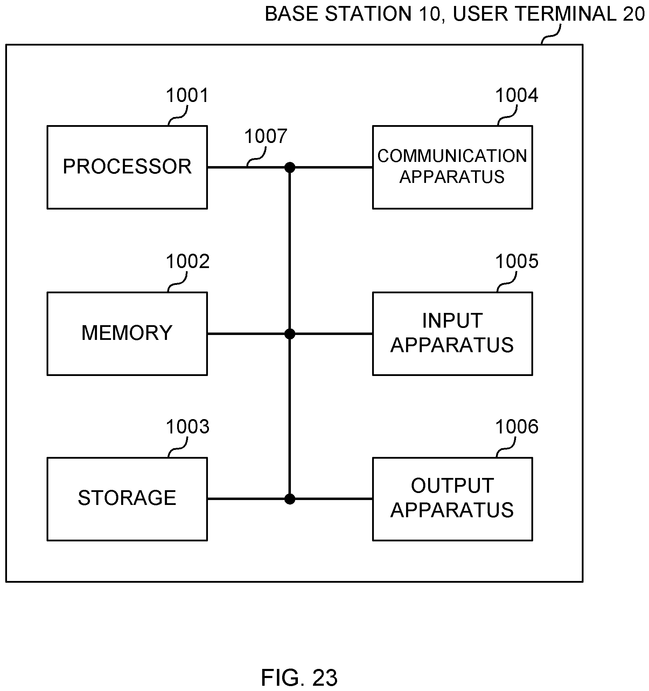

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be identified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and the like in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (such as PUCCH and PDCCH) and information elements are possible to be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "being X") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

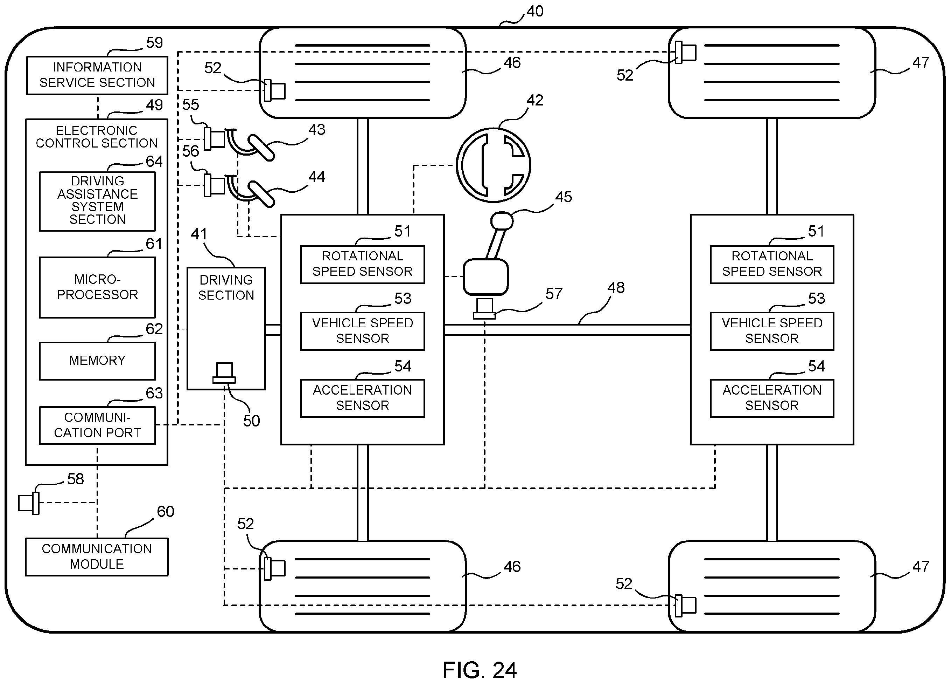

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be applied in combination (for example, a combination of LTE or LTE-A and 5G, and the like).

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low, " "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that judges an eight-port partial-coherent precoder on a basis of at least one of a four-port precoder and a two-port precoder; and
a transmitting section that performs uplink transmission on a basis of the eight-port partial-coherent precoder.

2. The terminal according to claim 1, wherein
the control section, when having a capability supporting a four-port coherent group, judges the eight-port partial-coherent precoder with the number of layers equal to or less than four on a basis of a four-port precoder, and
the transmitting section transmits transmission of every layer of the eight-port partial-coherent precoder by using a port of the four-port coherent group.

3. The terminal according to claim 1, wherein
the control section, when having a capability supporting two four-port coherent groups, judges the eight-port partial-coherent precoder with the number of layers equal to or more than five on a basis of a first precoder of four-port and a second precoder of four-port, and
the transmitting section transmits transmission of a layer corresponding to the first precoder of the eight-port partial-coherent precoder by using a port of a first four-port coherent group and transmits transmission of a layer corresponding to the second precoder of the eight-port partial-coherent precoder by using a port of a second four-port coherent group.

4. The terminal according to claim 1, wherein
the control section, when having a capability supporting a two-port coherent group, judges the eight-port partial-coherent precoder with the number of layers equal to or less than two on a basis of a two-port precoder, and
the transmitting section transmits transmission of every layer of the eight-port partial-coherent precoder by using a port of the two-port coherent group.

5. A radio communication method for a terminal, the radio communication method comprising:
judging an eight-port partial-coherent precoder on a basis of at least one of a four-port precoder and a two-port precoder; and
performing uplink transmission on a basis of the eight-port partial-coherent precoder.

6. A base station comprising:
a control section that transmits, to a terminal, configuration information to cause an eight-port partial-coherent precoder to be judged based on at least one of a four-port precoder and a two-port precoder; and
a receiving section that receives uplink transmission transmitted based on the eight-port partial-coherent precoder.
